# FASCICULE DE BREVET EUROPEEN

(11) **EP 2 419 620 B1**
(45) Date de publication et mention de la délivrance du brevet: **15.06.2016**
(21) Numéro de dépôt: 10715953.5
(22) Date de dépôt: 18.03.2010
(51) Int. Cl.: F02K 1/76, F02K 1/72, B64C 13/50

(54) **DISPOSITIF D'INVERSION DE POUSSÉE**
SCHUBUMKEHRVORRICHTUNG
THRUST REVERSAL DEVICE

(30) Priorité: 16.04.2009 FR 0952500
(43) Date de publication de la demande: 22.02.2012
(73) Titulaire: Aircelle, 76700 Gonfreville l'Orcher (FR)
(72) Inventeur: MAALIOUNE, Hakim, F-78630 Orgeval (FR)
(74) Mandataire: Gaillarde, Frédéric F. Ch.
(86) Numéro de dépôt international: PCT/FR2010/050488
(87) Numéro de publication internationale: WO 2010/119204

(56) Documents cités:
- EP-A- 1 280 029
- EP-A- 1 413 736
- WO-A-2006/134253
- FR-A- 2 787 256
- FR-A- 2 872 222
- FR-A- 2 882 097
- FR-A- 2 920 202

## Description

La présente invention se rapporte à un système d'actionnement d'un inverseur de poussée pour nacelle de turboréacteur.

Le rôle d'un inverseur de poussée lors de l'atterrissage d'un avion est d'améliorer la capacité de freinage de l'avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. Cependant, de tels systèmes requièrent une maintenance importante car la moindre fuite dans le réseau hydraulique ou pneumatique peut avoir des conséquences dommageables tant sur l'inverseur que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089 ou WO2006/134253.

La fiabilité et la disponibilité de tels systèmes électriques sont des considérations importantes et constituent un axe important du développement des systèmes d'actionnement électriques.

Malgré les avancées dans ce domaine, notamment grâce à des méthodes de synchronisation, gestion des pannes, des incidents et autres, les dispositifs d'inversion de poussée restent considérés comme des dispositifs d'aide au freinage et ne sont pas certifiés comme système de freinage à part entière. En effet, la fonction de freinage est une fonction primaire devant présenter une probabilité de panne inférieure à 10⁻⁷ par heure de vol pour les certifications aéronautiques et non une fonction secondaire pour laquelle les probabilités de panne peuvent être supérieures.

Un besoin existe donc pour un système d'inversion de poussée permettant une plus grande disponibilité et une plus grande fiabilité du système.

Le critère de disponibilité s'entend de la capacité pour le système d'inversion de poussée à être déployé afin de remplir sa fonction d'aide au freinage.

La fiabilité est la mesure de la probabilité de fonctionnement ou de panne d'un système utilisé dans des conditions déterminées et pendant un temps donné. En aéronautique, cette grandeur caractérise la sécurité de fonctionnement d'un matériel.

Une des solutions pour améliorer la disponibilité d'un système est d'augmenter la fiabilité de ses composants.

Or, le matériel aéronautique est déjà développé pour présenter une fiabilité optimum et il existe un besoin pour une solution architecturale permettant d'améliorer encore cette disponibilité et fiabilité.

Afin de pallier en tout ou partie le problème évoqué ci-dessus, la présente invention se rapporte à un dispositif d'inversion de poussée comprenant au moins un capot monté mobile entre une position de fermeture et une position d'ouverture, ledit capot étant actionné par au moins un actionneur apte à être entraîné par au moins un moteur électrique, caractérisé en ce que au moins un moteur électrique est relié à au moins deux alimentations électriques distinctes.

En effet, il est apparu que le système d'alimentation électrique était généralement l'élément de la chaîne le plus faible en termes de fiabilité. Ainsi, en prévoyant une double alimentation électrique de chaque moteur électrique entraînant des actionneurs, la fiabilité du système s'en trouve grandement augmenté.

Avantageusement, chaque moteur électrique sera relié à deux alimentations électriques distinctes.

De manière préférentielle, le moteur électrique est un moteur électrique double bobinage, chaque bobinage étant relié à une alimentation électrique distincte de l'alimentation de l'autre bobinage.

Selon une variante de réalisation, au moins un actionneur est associé à un moteur électrique propre.

De manière alternative ou complémentaire, au moins un moteur électrique est apte à entraîner au moins deux actionneurs.

Avantageusement, le dispositif d'inversion de poussée est un dispositif d'inversion de poussée synchronisé électriquement. Une telle méthode de synchronisation électrique est décrite dans la demande FR 08/03157 déposée le 6 juin 2008 et non encore publiée.

De manière préférentielle, la première alimentation électrique est reliée à une première unité de commande et pilotage, et que la deuxième alimentation électrique est reliée à une deuxième unité de commande et de pilotage, chaque unité de commande et de pilotage étant alimentée par une alimentation électrique propre.

Avantageusement, chaque unité de commande et de pilotage est reliée à un contrôleur avion apte à transmettre des instructions de commande du dispositif d'inversion de poussée.

De manière complémentaire, le dispositif d'inversion de poussée comprend un dispositif de tuyère variable.

Avantageusement, le capot mobile remplit une fonction de tuyère variable. Un tel dispositif d'inversion de poussée dans lequel le capot mobile peut remplir lui-même la fonction de tuyère variable est décrit par exemple dans la demande FR 2 902 839. Un tel système est avantageux car les mêmes vérins sont utilisés pour actionner le capot mobile selon un mode d'inversion de poussée ou un mode de tuyère variable. La disponibilité accrue du système permet que la fonction de tuyère variable soit remplie par les vérins du dispositif d'inversion de poussée.

Avantageusement encore, les alimentations électriques sont commutables entre une première position de commande de la tuyère variable et une deuxième position de commande de l'inversion de poussée. Un tel système est décrit par exemple dans la demande FR 08/00772 déposée le 13 février 2008 et non encore publiée.

La présente invention sera mieux comprise à la lumière de la description détaillée qui suit en regard du dessin annexé dans lequel :
- La figure 1 est une représentation schématique générale d'un dispositif d'inversion de poussée.
- La figure 2 est une représentation schématique fonctionnelle d'un dispositif d'inversion de poussée selon l'invention.
- La figure 3 est une représentation schématique d'une variante de réalisation de l'invention, le dispositif comprenant une fonction de tuyère variable.

Avant de décrire en détail un mode de réalisation de l'invention, il est important de préciser que le dispositif décrit n'est pas limité à un type d'inverseur en particulier. Bien qu'illustrée par un inverseur à grilles comprenant des capots mobiles coulissant le long de rails, elle pourra être mise en oeuvre avec des inverseurs de conceptions différentes.

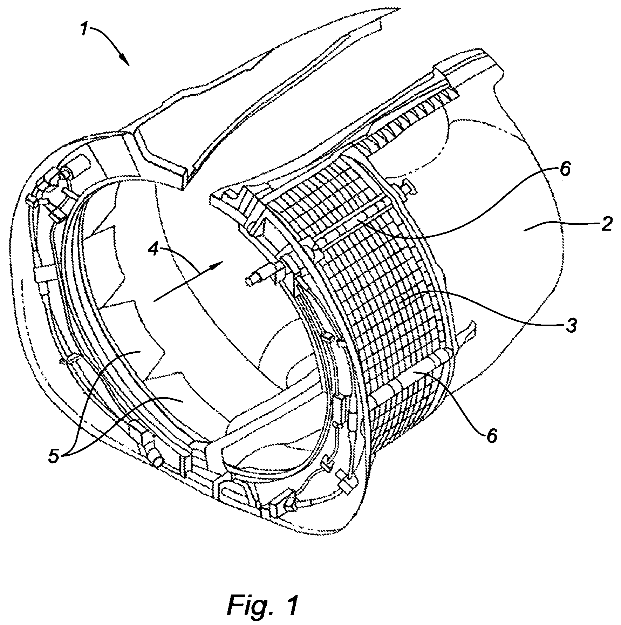

La figure 1 présente une vue schématique partielle d'une nacelle intégrant un inverseur de poussée 1. Le turboréacteur n'est pas représenté.

Cet inverseur de poussée 1 possède une structure comprenant deux capots mobiles 2 semi-circulaires susceptibles de coulisser le long de rails (non visibles) pour découvrir des grilles 3 d'aubes de déviation placées entre les capots mobiles 2 et une section de passage du flux d'air 4 à dévier. Des portes de blocages 5 sont disposées à l'intérieur de la structure de manière à pouvoir pivoter et passer d'une position dans laquelle elles ne gênent pas le passage du flux d'air 4 à une position dans laquelle elles bloquent au moins partiellement ce passage. Afin de coordonner l'ouverture des capots mobiles 2 avec une position obturante des portes de blocage 5, celles-ci sont mécaniquement reliées au capot mobile 2 par des charnières et un système de bielles (non représentées).

Le déplacement des capots mobiles 2 est assuré par un ensemble d'actionneurs électromécaniques 6 montés sur un cadre avant.

En l'espèce, chaque capot mobile 2 est actionné à l'aide de trois actionneurs électromécanique 6 comprenant chacun une tige mécanique 6b commandée par un boîtier de contrôle 6a associé comprenant un moteur électrique.

Le moteur électrique est un moteur électrique double bobinage 7a, 7b. Conformément à l'invention, chaque bobinage est alimenté électriquement par une source d'alimentation électrique 10a, 10b distincte par l'intermédiaire d'une unité de contrôle 11 a, 11 b dédiée répartissant et contrôlant l'alimentation de chaque moteur électrique sur son l'alimentation concernée (voie *a,* voie *b*).

Chaque unité de contrôle 11 a, 11 b est également reliée à un resolver 12a, 12b de chaque actionneur 6 permettant de surveiller l'état et la position du vérin et à l'unité de contrôle de piloter les moteurs en conséquence selon une stratégie de commande déterminées. Cela permet notamment la mise en place d'une synchronisation électrique entre les actionneurs.

Bien évidemment, on notera que les instructions d'ouverture et de fermeture du dispositif d'inversion de poussée et autres ordres, sont transmis en amont par un FADEC 13 (Full Authority Digital Engine Controler), c'est-à-dire une unité de contrôle et de commande avion supérieure. Le FADEC 13 comprendra avantageusement également deux voies de commandes 13a, 13b.

Bien évidemment, les unités de contrôle 11 a, 11 b pourront être regroupée dans une même unité de contrôle avec des voies de traitement ségrégées.

Ainsi, en cas de panne d'alimentation ou de défaillance d'un circuit de contrôle, un deuxième circuit de contrôle est disponible et pourra permettre d'assurer le fonctionnement du dispositif d'inversion de poussée.

Le choix du contrôleur 11 a, 11 b en contrôle principal pourra, par exemple, être laissé au FADEC 13, l'autre contrôleur étant alors en veille.

Le choix pourra également être effectué par les unités de contrôle 11 a, 11 b elles-mêmes, avec détermination d'un contrôleur principal et d'un contrôleur secondaire ou encore une stratégie où chaque contrôleur est contrôleur principal à tour de rôle avec changement à chaque démarrage des contrôleurs afin de veiller à ce que chaque voie soit fréquemment activée et minimiser les pannes dormantes.

En cas de défaillance de la voie (*a* ou *b*) du contrôleur principal, la main est passée au contrôleur en veille sur l'autre voie (*b* ou *a*).

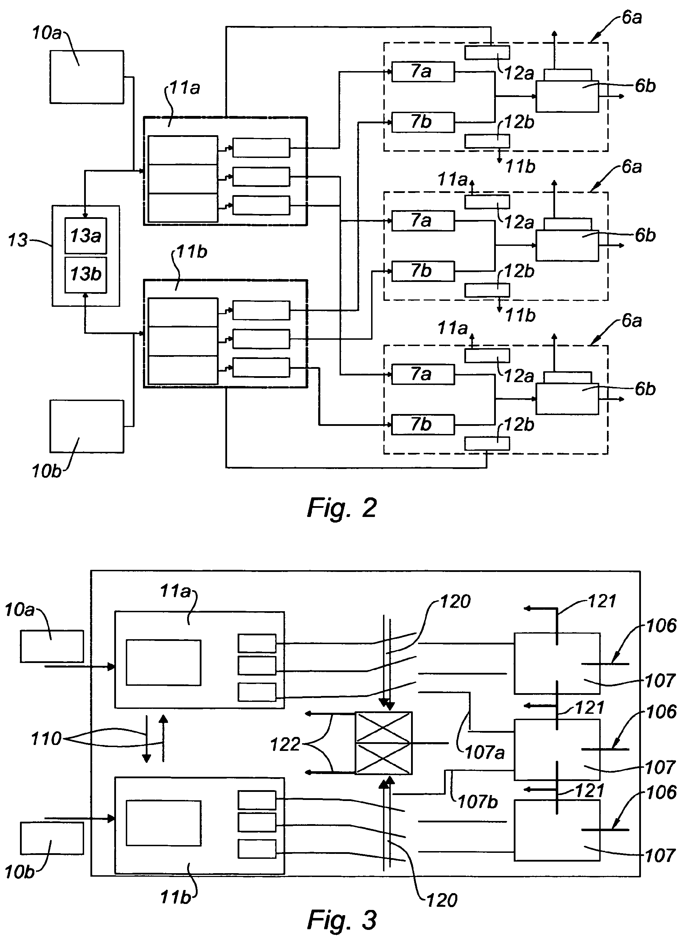

Le système représenté sur la figure 3 illustre l'invention appliquée à un dispositif d'inversion de poussée comprenant une section aval de tuyère variable telle que notamment décrite dans la demande FR 2 902 839.

De manière similaire au système représenté à la figure 2, le système représenté à la figure 3 comprend deux alimentations électriques 10a, 10b alimentant chacune une unité de contrôle 11 a, 11 b. Les unités de contrôle 11a, 11 b sont à aptes à communiquer entre elles par le biais de canaux de communication 110 croisés.

La section de tuyère variable du capot mobile est actionné par trois actionneurs électromécaniques 106, entrainés chacun par un moteur électrique 107, le moteur électrique central étant alimenté par deux alimentations 107a, 107b distinctes tandis que les deux moteurs électriques latéraux sont alimentés en double par la même unité de contrôle 11a, 11b.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif d'inversion de poussée (1) comprenant au moins un capot (2) monté mobile entre une position de fermeture et une position d'ouverture, ledit capot étant actionné par au moins un actionneur (6) apte à être entraîné par au moins un moteur électrique, **caractérisé en ce que** au moins un moteur électrique est relié à au moins deux alimentations électriques distinctes (7a, 7b, 107a, 107b).

2. Dispositif (1) selon la revendication 1 **caractérisé en ce que** le moteur électrique est un moteur électrique double bobinage, chaque bobinage étant relié à une alimentation électrique distincte (7a, 107a) de l'alimentation (7b, 107b) de l'autre bobinage.

3. Dispositif (1) selon l'une quelconque des revendications 1 ou 2, **caractérisé en ce qu'**au moins un actionneur (6) est associé à un moteur électrique propre.

4. Dispositif (1) selon l'une quelconque des revendications 1 à 3, **caractérisé en ce qu'**au moins un moteur électrique est apte à entraîner au moins deux actionneurs (6).

5. Dispositif (1) selon l'une quelconque des revendications 1 à 4, **caractérisé en ce que** le dispositif d'inversion de poussée est un dispositif d'inversion de poussée synchronisé électriquement.

6. Dispositif (1) selon l'une quelconque des revendications 1 à 5, **caractérisé en ce que** la première alimentation électrique (7a) est reliée à une première unité de commande (11 a) et pilotage, et que la deuxième alimentation (7b) électrique est reliée à une deuxième unité de commande (11b) et de pilotage, chaque unité de commande et de pilotage étant alimentée par une alimentation électrique propre (10a, 10b).

7. Dispositif (1) selon la revendication 6, **caractérisé en ce que** chaque unité de commande et de pilotage (11a, 11 b) est reliée à un contrôleur avion (13) apte à transmettre des instructions de commande du dispositif d'inversion de poussée.

8. Dispositif (1) selon l'une quelconque des revendications 1 à 7, **caractérisé en ce que** le dispositif d'inversion de poussée comprend un dispositif de tuyère variable.

9. Dispositif (1) selon la revendication 8, **caractérisé en ce que** le capot mobile (2) remplit une fonction de tuyère variable.

10. Dispositif (1) selon l'une quelconque des revendications 8 ou 9, **caractérisé en ce que** les alimentations électriques sont commutables (120) entre une première position de commande de la tuyère variable et une deuxième position de commande de l'inversion de poussée.

## Patentansprüche

1. Schubumkehrvorrichtung (1), zumindest eine Abdeckung (2) umfassend, die mobil zwischen einer Schließposition und einer Öffnungsposition montiert ist, wobei die besagte Abdeckung durch zumindest einen Steller (6) betätigt wird, der imstande ist, durch zumindest einen Elektromotor angetrieben zu werden, **dadurch gekennzeichnet, dass** zumindest ein Elektromotor mit zumindest zwei verschiedenen Stromquellen (7a, 7b, 107a, 107b) verbunden ist.

2. Vorrichtung (1) nach Anspruch 1, **dadurch gekennzeichnet, dass** der Elektromotor ein Doppelspulen-Elektromotor ist, wobei jede Spule mit einer Stromquelle (7a, 107a) verbunden ist, die sich von der Stromquelle (7b, 107b) der anderen Spule unterscheidet.

3. Vorrichtung (1) nach irgendeinem der Ansprüche 1 oder 2, **dadurch gekennzeichnet, dass** zumindest ein Steller (6) einem eigenen Elektromotor zugeordnet ist.

4. Vorrichtung (1) nach irgendeinem der Ansprüche 1 bis 3, **dadurch gekennzeichnet, dass** zumindest ein Elektromotor imstande ist, zumindest zwei Steller (6) abzutreiben.

5. Vorrichtung (1) nach irgendeinem der Ansprüche 1 bis 4, **dadurch gekennzeichnet, dass** die Schubumkehrvorrichtung eine elektrisch synchronisierte Schubumkehrvorrichtung ist.

6. Vorrichtung (1) nach irgendeinem der Ansprüche 1 bis 5, **dadurch gekennzeichnet, dass** die erste Stromquelle (7a) mit einer ersten Steuereinheit (11a) und Lenkungseinheit verbunden ist, und die zweite Stromquelle (7b) mit einer zweiten Steuereinheit (11b) und Lenkungseinheit verbunden ist, wobei jede Steuereinheit und Lenkungseinheit durch eine eigene Stromquelle (10a, 10b) versorgt wird.

7. Vorrichtung (1) nach Anspruch 6, **dadurch gekennzeichnet, dass** Steuer- und Lenkungseinheit (11a, 11b) mit einem Flugzeug-Controller (13) verbunden ist, der imstande ist, Steuerbefehle der Schubumkehrvorrichtung zu übertragen.

8. Vorrichtung (1) nach irgendeinem der Ansprüche 1 bis 7, **dadurch gekennzeichnet, dass** die Schubumkehrvorrichtung eine variable Düsenvorrichtung umfasst.

9. Vorrichtung (1) nach Anspruch 8, **dadurch gekennzeichnet, dass** die mobile Abdeckung (2) eine Funktion einer variablen Düse erfüllt.

10. Vorrichtung (1) nach irgendeinem der Ansprüche 8 oder 9, **dadurch gekennzeichnet, dass** die Stromquellen zwischen einer ersten Steuerposition für die variable Düse und einer zweiten Steuerposition für die Schubumkehr umgeschaltet (120) werden können.

## Claims

1. A thrust reverser device (1) comprising at least one cowl (2) movably mounted between a closed position and an open position, said cowl being actuated by at least one actuator (6) adapted to be driven by at least one electric motor, **characterized in that** at least one electric motor is connected to at least two separate power supplies (7a, 7b, 107a, 107b).

2. The device (1) according to claim 1 **characterized in that** the electric motor is a dual coil electric motor, each coil being connected to a power supply (7a, 107a) separate from the supply (7b, 107b) of the other coil.

3. The device (1) according to any one of claim 1 or 2, **characterized in that** at least one actuator (6) is associated with its own electric motor.

4. The device (1) according to any one of claims 1 to 3, **characterized in that** at least one electric motor is adapted to drive at least two actuators (6).

5. The device (1) according to any one of claims 1 to 4, **characterized in that** the thrust reverser device is an electrically synchronized thrust reverser device.

6. The device (1) according to any one of claims 1 to 5, **characterized in that** the first power supply (7a) is connected to a first control (11 a) and drive unit, and **in that** the second power supply (7b) is connected to a second control (11 b) and drive unit, each control and drive unit being supplied by its own power supply (10a, 10b).

7. The device (1) according to claim 6, **characterized in that** each control (11a, 11b) and drive unit is connected to an aircraft controller (13) adapted to transmit instructions for controlling the thrust reverser device.

8. The device (1) according to any one of claims 1 to 7, **characterized in that** the thrust reverser device comprises a variable nozzle device.

9. The device (1) according to claim 8, **characterized in that** the movable cowl (2) performs a function of variable nozzle.

10. The device (1) according to any one of claim 8 or 9, **characterized in that** the power supplies are switchable (120) between a first control position of the variable nozzle and a second control position of the thrust reverser.
